Europäisches Patentamt

**European Patent Office**

**Office européen des brevets**

(11) Numéro de publication: **0 271 390 B1**

# FASCICULE DE BREVET EUROPEEN

(45) Date de publication de fascicule du brevet: **26.02.92**   (51) Int. Cl.⁵: **A01F 15/00**

(21) Numéro de dépôt: **87402595.0**

(22) Date de dépôt: **18.11.87**

(54) **Presse à balles cylindriques automatisée.**

(30) Priorité: **21.11.86 FR 8616262**

(43) Date de publication de la demande:
**15.06.88 Bulletin 88/24**

(45) Mention de la délivrance du brevet:
**26.02.92 Bulletin 92/09**

(84) Etats contractants désignés:
**DE GB IT SE**

(56) Documents cités:
**EP-A- 0 117 817      EP-A- 0 181 969**
**FR-A- 2 521 391      GB-A- 2 066 146**
**GB-A- 2 138 354      US-A- 4 246 743**

(73) Titulaire: **HESSTON BRAUD**

**F-85220 COEX(FR)**

(72) Inventeur: **Renaud, Loic**
**Les Portes-Rouges Commequiers**
**F-85220 Coex(FR)**

(74) Mandataire: **Caunet, Jean et al**
**Cabinet BEAU DE LOMENIE 55, rue d'Amster-**
**dam**
**F-75008 Paris(FR)**

# Description

La présente invention concerne une presse à balles cylindriques, dite encore presse à balles rondes, dont le fonctionnement est automatisé.

On connait déjà des presses à balles de ce type destinées à former des balles cylindriques par enroulement sur eux-mêmes de végétaux coupés récoltés sur le sol et répartis en nappe à l'entrée de la machine par un organe ramasseur rotatif. Le principe de fonctionnement de ces presses est bien connu et on ne rappellera ici pour mémoire que le déroulement des différentes phases de formation de la balle.

Les végétaux répartis en nappe sont introduits dans une chambre de formation délimitée par les parois latérales de la presse et par un jeu de courroies passant sur plusieurs rouleaux dont certaine entraînée en rotation assurent le défilement desdites courroies qui, par leur contact avec la balle en formation, entraînent celle-ci en rotation. Lorsque, par apport des végétaux ramassés, le diamètre de la balle augmente, la longueur de courroie en contact avec la balle doit s'adapter à cette expansion. A cette fin, certains des rouleaux sont montés sur des axes mobiles et jouent le rôle de tendeurs des courroies tout en assurant une force de compression sur la balle.

Lorsque la balle a atteint le diamètre maximal requis, un dispositif de ficelage est mis en oeuvre de façon à la cercler par plusieurs tours d'une ou plusieurs ficelles de liage maintenant ladite balle comprimée.

En fin de ficelage, le défilement des courroies est arrêté et une porte arrière de la machine s'ouvre, pour permettre à la balle de sortir de la machine.

Les presses à balles de ce type sont montées sur roues et tirées par un tracteur. Un arbre de transmission est relié à la prise de force du tracteur et entraîne en rotation les rouleaux qui entraînent à leur tour les courroies.

Par ailleurs, des moyens de liaison, tels que des circuits hydrauliques ou électriques, permettent de commander à partir du tracteur, les différentes fonctions telles que ouverture et fermeture de la porte, ficelage, etc...

On comprendra aisément que, lors du fonctionnement de la machine, l'opérateur doit, outre la conduite du tracteur, surveiller en permanence le bon déroulement des opérations de formation de la balle et, lorsque celle-ci est terminée, il doit arrêter le tracteur puis commander le ficelage. Lorsque le ficelage est terminé, il doit arrêter la rotation de la prise de force du tracteur, reculer de quelques mètres pour se placer en position d'éjection de balle, commander l'ouverture de la porte. Après avoir contrôlé que la balle a bien été éjectée, il doit ensuite commander la fermeture de la porte, réenclencher la prise de force du tracteur et embrayer enfin l'avancement du tracteur pour commencer un nouveau cycle de ramassage et de formation de balle.

Il est clair que le bon fonctionnement de ces machines nécessite de la part de l'opérateur une attention soutenue qu'il doit porter à la fois devant lui pour la conduite du tracteur et derrière lui pour la surveillance de la machine, et aussi l'exécution de nombreuses manoeuvres en fin de formation et pour l'éjection de la balle. Ces différents impératifs entraînent, outre la fatigue de l'opérateur, une perte de temps dans les différentes manoeuvres. De plus, le contrôle des diverses opérations est malaisé et rendu encore plus difficile par les conditions du travail qui provoquent souvent beaucoup de poussière, ce qui empêche l'opérateur de bien voir ce qui se passe dans et derrière la machine.

Pour parer à ces inconvénients, des systèmes d'automatisation ont été proposés afin de faciliter les contrôles du fonctionnement de la machine et supprimer certaines des manoeuvres de l'opérateur. Certains de ces systèmes assurent le contrôle et la commande d'une seule fonction (par exemple le ficelage). D'autres constituent une automatisation plus poussée qui englobe plusieurs fonctions.

L'un de ceux-ci est décrit dans le document FR 2 541 561. Le dispositif de commande automatique décrit dans ce document a pour base l'automatisation de l'opération de liage, ou ficelage, et différents systèmes de contrôle et de commande automatique lui sont adjoints. Selon ce document, un capteur détecte l'obtention du diamètre maximal de la balle et un signal sonore et lumineux en avertit l'opérateur. Celui-ci arrête alors le tracteur et commande le départ de l'opération de ficelage qui se réalise de manière automatique jusqu'à ce que la ficelle soit coupée. Un capteur détecte alors la position du bras ou guidage de la ficelle qui se trouve alors dans la position correspondant à la coupe de la ficelle et permet de passer à l'opération d'éjection de la balle, à condition que la rotation de celle-ci ait été arrêtée par l'opérateur. Si cela est réalisé, l'ouverture de la porte est commandée automatiquement et la balle est éjectée. Un autre capteur liée à la rampe de déchargement détecte la position de celle-ci et, après s'être assuré de l'éjection, commande la fermeture de la porte.

Ce système d'automatisation permet déjà de supprimer un certain nombre de manoeuvres et de contrôle de la part de l'opérateur. Cependant, plusieurs inconvénients subsistent. D'une part, à la fin du liage, l'opérateur doit intervenir pour arrêter la rotation de la balle en déclenchant manuellement la prise de force du tracteur. D'autre part, si le ficelage est globalement automatisé, l'opérateur n'est averti de la fin de la formation de la balle que lorsque celle-ci atteint son diamètre maximum. Il doit alors réagir très rapidement pour stopper le tracteur et commander les opérations de liage, sous peine de poursuivre l'avance du tracteur et le ramassage au-delà de la capacité de la machine.

Un but de la présente invention est de supprimer les inconvénients précités. Un autre but est de fournir une presse à balles rondes automatisée qui décharge l'opérateur de manoeuvres répétitives à chaque cycle, telle que le débrayage de la prise de force du tracteur.

Pour atteindre ces buts, il est proposé une presse à balles cylindriques, tractée et automatisée, comportant des organes d'enroulement de la balle entraînée par une prise de force d'un tracteur et coopérant avec des moyens pour exercer un effort de densification sur la balle, une porte arrière relevable pour permettre l'éjection de la balle, des moyens de détection d'un diamètre maximal prédéterminé de la balle, des moyens de ficelage de la balle qui sont mis en oeuvre automatiquement lorsque les moyens de détection sont sollicités et des moyens de commande automatique de l'ouverture et de la fermeture de la porte pour éjecter la balle terminée.

Selon l'invention, cette presse comprend également des moyens de détection du défilement de la ficelle de liage, des deuxièmes moyens de détection de la formation de la balle à un pourcentage prédéterminé inférieur à 100% pour avertir le conducteur de la terminaison prochaine de la balle, des moyens de commande automatique de la pression pour les moyens de densification et des moyens de commande automatique de l'arrêt des organes d'enroulement lorsque les moyens de détection précités du défilement de la ficelle de liage ne sont plus sollicités.

Grâce à l'invention, le fonctionnement de la presse est totalement automatisé et l'opérateur n'a plus que deux manoeuvres à réaliser qui sont l'arrêt du tracteur lorsque la balle est terminée, l'opérateur étant alors averti grâce aux moyens de détection du diamètre maximal de la balle, et la remise en route du tracteur lorsque la porte est refermée après éjection de la balle.

L'invention permet ainsi d'augmenter le rendement de la machine et de diminuer la fatigue de l'opérateur. Il est à noter qu'un cycle de réalisation d'une balle dure d'une à deux minutes, et que, grâce à l'invention, l'opérateur n'a plus à réaliser de manière fréquente et répétitive les nombreuses manoeuvres que nécessitaient les machines selon l'art antérieur.

Un autre avantage est que grâce aux moyens de détection de la formation de la balle à un pourcentage inférieur à 100%, l'opérateur est averti quelque temps avant la fin de la formation de la balle et peut ainsi se préparer à arrêter le tracteur dès que le diamètre maximal est atteint.

Selon une caractéristique additionnelle de l'invention, les moyens de densification de la balle comportent des vérins hydrauliques coopérant avec des moyens de commande automatique de leur alimentation sous une pression réglable normalement maintenue constante pendant la période de formation de la balle, les vérins étant automatiquement alimentés lors de la fermeture de la porte et la pression étant automatiquement supprimée lors de la commande d'ouverture de la porte.

Grâce à cette caractéristique supplémentaire, non seulement la densité de la balle peut être réglée aisément, par exemple à partir du tracteur, en ajustant la pression dans les vérins, mais de plus la pression exercée par ceux-ci sur la balle est automatiquement appliquée ou retirée en fonction des mouvements de la porte, ce qui ne pouvait se réaliser avec les dispositifs de type tendeurs à ressorts utilisés sur les machines selon l'art antérieur. Dès que la porte s'ouvre, les courroies d'entraînement de la balle sont détendues, ce qui facilite l'ouverture de la porte et l'évacuation de la balle. Dès que la porte est commandée pour se fermer, les vérins sont mis en pression et ramènent automatiquement les rouleaux mobiles dans la position de début de cycle en appliquant automatiquement sur les courroies l'effort de densification préréglé.

D'autres caractéristiques et avantages apparaîtront lors de la description qui va être faite d'un mode de réalisation particulier de l'invention.

On se reportera aux dessins annexés dans lesquels :
- la figure 1 est une vue latérale d'une presse selon l'invention montrant les différents organes principaux de la machine et certains capteurs agissant dans le dispositif d'automatisation ;
- la figure 2 est une vue schématique de la presse en position porte ouverte pendant la sortie de la balle ;
- la figure 3 est un schéma du circuit hydraulique de la presse ;
- la figure 4 est une vue du pupitre de commande et de contrôle des automatismes.

La presse à balle comporte un châssis 11 monté sur roues 12 et une porte arrière 13 relevable par pivotement autour d'un axe supérieur 14. Un timon 15 permet d'atteler la presse à un tracteur dont la prise de force entraîne l'arbre de transmission 16 qui lui est raccordé. L'arbre de transmission 16 est relié à l'entrée d'un renvoi d'angle 17 qui entraîne, d'une part, un groupe hydraulique (non représenté) qui fournit la pression nécessaire aux différents vérins et, d'autre part, un pignon 18 d'entraînement des organes de ramassage 26 et d'enroulement 20. Un embrayage 21 est disposé entre le renvoi d'angle 17 et le pignon 18 et permet d'accoupler ou de désaccoupler ceux-ci. Le pignon 18 entraîne par l'intermédiaire de chaînes 22, 23 les courroies d'enroulement 24 et, par une courroie 25, le tambour rotatif de ramassage 26.

Les courroies d'enroulement 24 passent sur plusieurs rouleaux de guidage dont certains 27 ont leurs axes fixés à proximité de la paroi de pourtour de la porte 13 et d'autres 28 ont leurs axes fixés sur un levier 29 pivotant par rapport au châssis 11. Ce levier 29 et les rouleaux 28 sont disposés de façon que, lorsque la balle formée au départ dans la chambre de formation 30 augmente de diamètre, le levier 29 pivote vers le haut en permettant à la chambre de formation 30 de s'agrandir vers l'arrière de la machine par le déplacement des courroies 24.

Le levier 29 est fixé sur un arbre 31 qui porte également vers ses extrémités de chaque côté de la machine, des cames 32 sur lesquelles s'enroulent des chaînes 33 dont une extrémité est fixée aux cames près de l'arbre 31 et l'autre extrémité est reliée à la tige des vérins de densité 34 dont le fût est articulé sur le bâti 11 de la presse.

On comprendra aisément que lorsque la petite chambre des vérins 34 est alimentée en fluide hydraulique sous pression, ceux-ci exercent une traction sur les chaînes 33 tendant à faire pivoter vers le bas les cames 32 et le levier 29. Ce faisant, les rouleaux tendeurs 28 exercent une tension sur les courroies d'enroulement 24 qui tend à diminuer le volume de la chambre de formation de balle. Ainsi, lorsque le diamètre de la balle augmente, les vérins 34 tendent à s'opposer à cette augmentation et créent un effort de compression sur la balle, ce qui augmente sa densité.

On remarquera que, grâce au profil particulier de la came 32, et les vérins 34 étant alimentés sous pression constante ainsi que cela sera précisé plus loin, le couple exercé sur l'arbre 31 augmente lorsque le levier 29 pivote vers le haut et, en conséquence, l'effort de tension exercé par les rouleaux 28 sur les courroies d'enroulement 24 augmente en même temps que le diamètre de la balle, de façon à assurer une densité maximale de celle-ci sur son pourtour.

Des moyens de détection de formation de la balle sont fixés sur le châssis et détectent d'arrivée du diamètre de la balle à une valeur prédéterminée. Ces moyens de détection sont constitués de deux contacteurs 50 et 51 qui sont actionnés par le levier 29 lorsque celui-ci pivote vers le haut. Un de ces contacteurs 50 est disposé de façon à être actionné par le levier 29 lorsque la balle atteint son diamètre maximal prédéterminé. L'autre contacteur 51 est placé légèrement en-dessous du premier contacteur 50, de façon à être actionné lorsque le diamètre de la balle atteint environ 90% du diamètre maximal prédéterminé. Les fonctions de ces deux contacteurs seront décrites dans la suite de ce mémoire.

La porte arrière 13 de la presse est actionnée par deux vérins 39 articulés d'une part sur le bâti 11 et d'autre part sur la porte 13. Un contacteur de fermeture de porte 52 est disposé sur le châssis, de façon à être actionné par ladite porte lorsque celle-ci est fermée. Un autre contacteur 53 est placé en haut du châssis, de façon à être actionné lorsque la porte est totalement ouverte.

Le châssis 11 de la presse est relié aux roues 12 par un levier 40 qui est articulé en partie basse du châssis et qui porte les essieux des roues. Un vérin 41 est articulé, d'une part, sur le châssis 11 et, d'autre part, sur le levier 40 et permet lorsqu'il est alimenté par le fluide hydraulique sous pression de relever la presse en faisant pivoter le levier 40 vers le bas.

La presse comporte également un dispositif éjecteur constitué de deux bras d'éjection 42 articulés par une de leurs extrémités, au bas du châssis 11, et maintenus dans une position relevée, sensiblement horizontale, par des moyens de rappel élastiques non représentés. Un cinquième contacteur 54 est actionné lorsque lesdits bras sont en position haute.

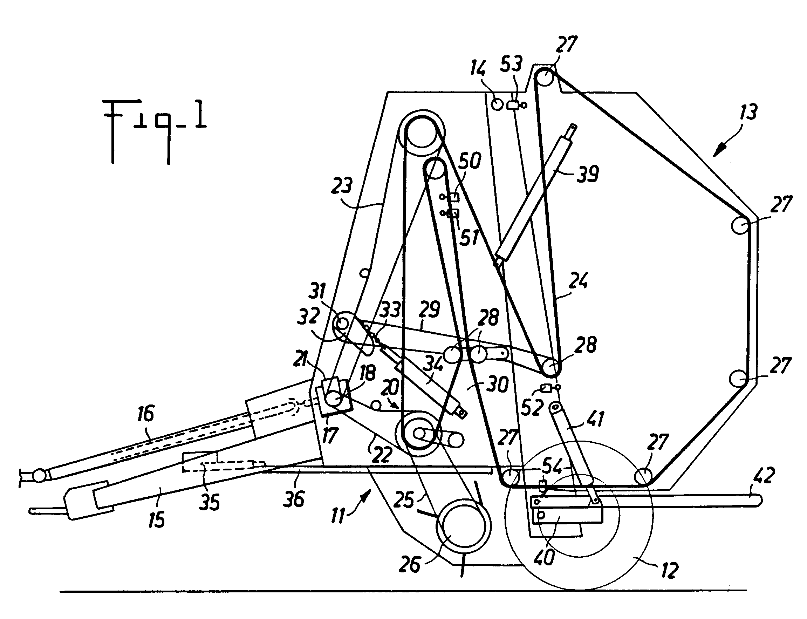

En outre, la presse comporte un dispositif de ficelage automatique dont on a seulement représenté, sur la figure 1, le vérin de commande 35 et les tubes guide-ficelles 36. Ce dispositif de ficelage automatique est de type connu comportant deux tubes guide-ficelles 36 pivotants et actionnés par le vérin 35, de sorte que les ficelles s'enroulent autour de la balle et sont automatiquement coupées à la fin de la période de ficelage. Un dispositif particulier utilisé dans la presse représentée, est décrit dans la demande de brevet français No. 85 14293 au nom de la société Hesston, auquel on pourra se reporter pour plus de détails sur son fonctionnement. Selon une particularité de la presse conforme à l'invention, ce dispositif comporte de plus des moyens de détection du défilement de la ficelle de liage, qui comprennent des poulies en contact périphérique avec les ficelles et qui sont donc entraînées en rotation lorsque les ficelles défilent pendant le ficelage. Des capteurs détectent la rotation de ces poulies.

Dès que la balle roule sur le sol, les bras 42, rappelés élastiquement vers le haut, se repositionnent à l'horizontale empêchant la balle éjectée de se rapprocher de la presse. La porte 13 peut alors se refermer sans risque de venir buter sur la balle éjectée.

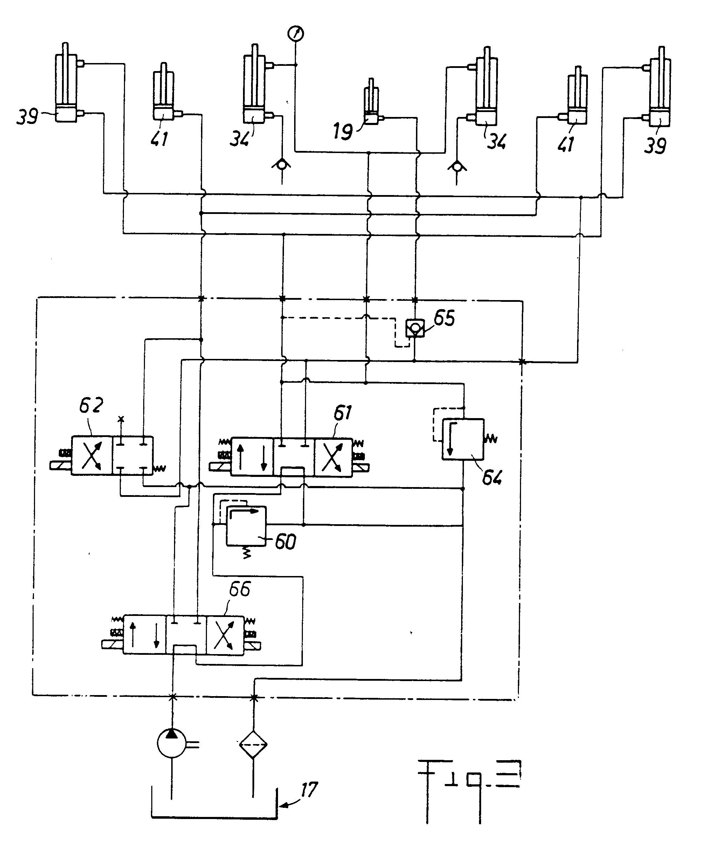

A la figure 3 est représenté le circuit hydraulique de la presse. On retrouve sur ce schéma les vérins d'ouverture de porte 39, les vérins de relevage 41 et les vérins de contrôle de densité 34. Un autre vérin 19 est prévu pour actionner l'embrayage 21.

Le circuit d'alimentation de ces différents vérins comprend le groupe hydraulique 17, une soupape de sécurité 60, un distributeur principal 61 à commande électrique, un distributeur 62 de commande du relevage de la presse, un limiteur de pression réglable 64, placé sur le circuit des vérins de densité 34, permettant de maintenir une pression constante dans lesdits vérins 34, un clapet piloté 65 placé sur le circuit du vérin d'embrayage 35 et un distributeur de commande manuelle 66 placé sur le circuit des vérins de relevage 41.

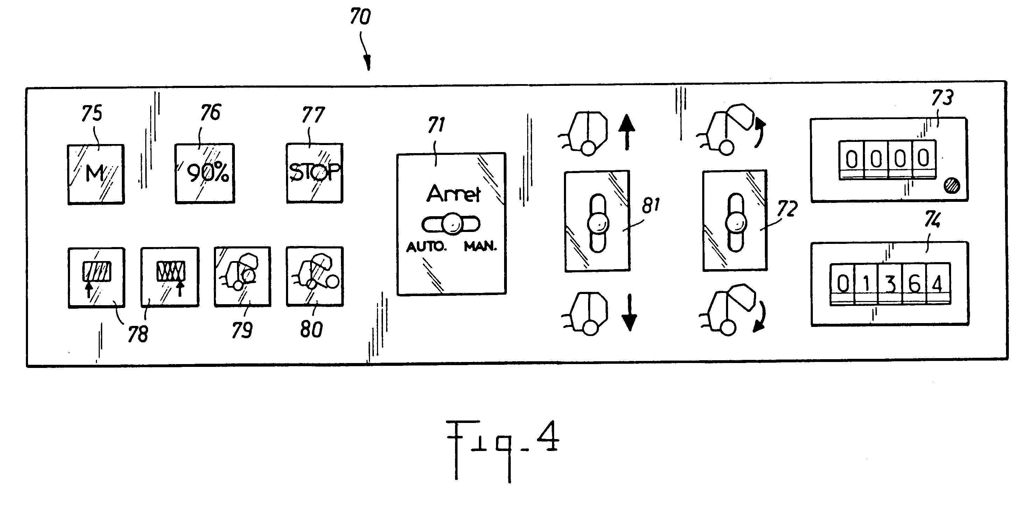

La figure 4 représente le tableau du pupitre 70 de commande et de contrôle des automatismes, placé dans la cabine du tracteur. Il comporte un sélecteur de formation 71 à trois positions : "manuel", "arrêt" et "automatique", un interrupteur 72 de commande manuelle d'ouverture et de fermeture de porte, un compteur journalier 73 du nombre de balle et un compteur totalisateur 74, et plusieurs témoins lumineux de contrôle : un voyant vert témoin du fonctionnement automatique 75 est allumé pendant tout le temps de la formation de la balle, un voyant de formation à 90% 76 s'allume lorsque le diamètre de la balle atteint 90% de son diamètre maximum, un voyant rouge de fin de formation 77 s'allume lorsque la balle est terminée, deux voyants oranges 78 de contrôle du déplacement indiquent le défilement des ficelles pendant l'opération de ficelage, un autre voyant orange 79, témoin d'ouverture de porte, s'allume dès que la porte est ouverte, et un dernier voyant 80 témoin d'éjection s'allume lorsque les bras 42 sont relevés après déchargement de la balle et enfin un interrupteur 81 de commande manuelle du relevage de la presse.

Pour bien comprendre le fonctionnement des automatismes, on va maintenant décrire étape par étape le déroulement d'un cycle complet de formation d'une balle.

La presse en position basse, porte arrière fermée, est tirée par un tracteur. Les courroies d'enroulement 24 et le dispositif de ramassage 26 sont entraînés en rotation. Les végétaux ramassés sur le sol s'accumulent dans la chambre de formation 30 en s'enroulant sur eux-mêmes. Au fur et à mesure de l'augmentation du diamètre de la balle, le levier 29 pivote vers le haut entraînant dans sa rotation la came 32, ce qui a pour effet de faire sortir la tige du vérin de densité 34 en évacuant le fluide hydraulique qu'il contient au travers du limiteur de pression 64. Grâce à ce limiteur réglé au préalable en fonction du produit récolté et de la densité de balle souhaitée, la pression agissant sur le vérin 34 est constante pendant tout le ramassage. Pendant tout ce temps, le voyant vert 75 du pupitre 70 reste allumé.

Lorsque le diamètre de la balle atteint environ 90% de son diamètre maximal, le levier 29 actionne le contacteur 51 qui commande l'allumage du témoin de formation à 90% 76 et l'extinction du témoin vert 75. L'opérateur est alors averti que la balle est presque terminée et il peut s'apprêter à arrêter la machine.

Lorsque la balle atteint son diamètre maximal, le levier 29 actionne le contacteur 50 qui commande l'allumage du témoin de fin de formation rouge "STOP" 77 et l'extinction du témoin de formation à 90% 76. Simultanément un buzzer, situé dans le tableau de commande du dispositif de ficelage qui est placé sous le pupitre 70 dans la cabine du tracteur, retentit pendant cinq secondes. L'opérateur doit alors arrêter l'avancement du tracteur. En même temps que le buzzer retentit et que le voyant 77 s'allume, le dispositif automatique de ficelage est mis en route. Le vérin 35 de commande des tubes déplace les tubes guide-ficelles 36 en position d'introduction des ficelles. Dès que les ficelles sont engagées dans la balle et défilent sous l'effet de la rotation de celle-ci, les capteurs détectent la rotation des poulies en contact avec lesdites ficelles et provoquant l'allumage des témoins de contrôle du défilement 78. Chacun de ces voyants correspond à une ficelle. L'opérateur peut ainsi contrôler directement sur le pupitre 70 la mise en place correcte des ficelles. Lorsque le cycle de ficelage, commandé automatiquement, est terminé les ficelles sont coupées et les voyants 78 s'éteignent puisque les capteurs ne sont plus actionnés par les poulies d'entraînement de la ficelle.

Dès que les ficelles sont coupées, le distributeur principal 61 à commande électrique est actionné automatiquement (déplacement vers la gauche selon la figure 3) et les vérins d'ouverture de porte 39 sont alimentés. Dès que la porte 13 est légèrement ouverte, le contacteur 52 est actionné et commande l'allumage du témoin d'ouverture de porte 79. Le contacteur de fermeture de porte 52 commande également le distributeur 62 à commande électrique de relevage de la presse. Les vérins de relevage 41 sont alors alimentés et la presse est relevée, dégageant ainsi les organes de ramassage 26 de la récolte répandue sur le sol.

Simultanément avec l'ouverture de la porte, le distributeur principal 61 dirige le fluide sous pression vers le vérin d'embrayage 19, au travers du clapet piloté 65, ce qui a pour effet de débrayer automatiquement les organes d'enroulement et de ramassage. Les courroies d'enroulement se trouvent alors à l'arrêt, ce qui est nécessaire pour ne pas ébouriffer la balle, formée et ficelée, par le contact des courroies lors de son éjection.

Lorsque le distributeur principal 61 est mis en position d'ouverture de porte, le circuit alimentant les vérins de densité 34 est mis en liaison avec le retour. Ces vérins sont donc mis hors pression et la tension des courroies d'enroulement 24 est supprimée.

Lorsque la porte est complètement ouverte, le contacteur d'ouverture de porte 53 est actionné et commande le distributeur principal 61 pour le repositionner au neutre.

On remarquera que, à ce moment, le vérin d'embrayage 19 reste sous pression grâce au clapet anti-retour piloté 65, maintenant ainsi les courroies d'enroulement à l'arrêt.

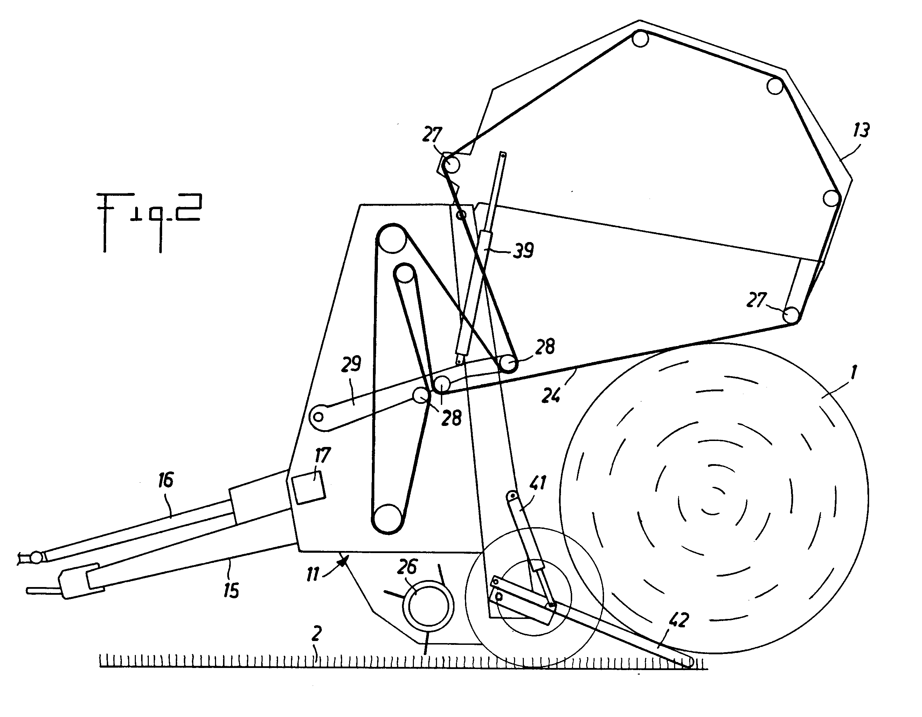

Lorsque la porte est ouverte, la balle roule hors de la presse en s'appuyant sur les bras 42 formant rampes de guidage. L'extrémité arrière des bras 42 s'appuie sur le sol (voir Figure 2) pour permettre la rotation de la balle vers l'arrière de la machine sous son propre poids. Dès que la balle a quitté les rampes 42, celles-ci se relèvent sous l'effet de ressorts de rappel. La longueur des rampes est prévue de telle façon que la balle, si elle avait tendance à rouler vers la presse, s'appuierait sur l'extrémité desdites rampes sans venir interférer avec la porte lors de sa fermeture. Lorsque les bras 42 se retrouvent en position haute, ils actionnent le contacteur 54 qui commande l'allumage du témoin d'éjection 80.

Ce contacteur 54 qui détecte la position haute des bras 42 commande également le distributeur principal 61 (déplacement vers la droite selon la figure 3). La porte peut alors se refermer et la machine s'abaisser, les vérins de relevage 41 étant alors reliés au circuit de retour.

Simultanément le clapet piloté 65 s'ouvre et, en relâchant la pression dans le vérin d'embrayage 19, réaccouple les courroies d'enroulement 24 et les organes ramasseurs 26 avec la prise de force du tracteur.

En même temps encore les vérins de densité 34 sont alimentés sous pression et font pivoter le levier 29 vers le bas tendant ainsi les courroies d'enroulement 24 pour les replacer en position de début de cycle.

Lorsque la porte 13 est refermée, le contacteur de fermeture 52 est actionné et commande l'extinction des témoins d'ouverture de porte 79, d'éjection 80 et du témoin rouge 77. Simultanément le voyant vert 75 s'allume pour avertir l'opérateur qu'un nouveau cycle peut commencer et qu'il peut embrayer l'avancement du tracteur.

On peut constater que, grâce au dispositif selon l'invention, l'opérateur de la presse décrite ci-dessus n'a plus que deux manoeuvres à réaliser, qui sont l'embrayage et le débrayage du tracteur en réponse aux signaux fournis par le pupitre du moniteur d'automatisme. De plus, il peut contrôler sans même se retourner la bonne réalisation des différentes étapes du cycle de formation de la balle.

Si nécessaire, l'opérateur peut commander manuellement l'ouverture ou la fermeture de la porte grâce au commutateur 72, ou encore le relevage ou l'abaissement de la presse grâce au commutateur 81.

## Revendications

1. Presse à balles cylindriques, tractée et automatisée, comportant des organes d'enroulement (20) de la balle entraînée par une prise de force d'un tracteur et coopérant avec des moyens (29, 31, 32, 33, 34) pour exercer un effort de densification sur la balle, une porte arrière (13) relevable pour permettre l'éjection de la balle, des moyens de détection (50) d'un diamètre maximal prédéterminé de la balle, des moyens de ficelage (35, 36) de la balle qui sont mis en oeuvre automatiquement lorsque les moyens de détection (50) sont sollicités, et des moyens de commande automatique de l'ouverture et de la fermeture de la porte (13) pour éjecter la balle terminée, caractérisée en ce qu'elle comprend également des moyens de détection du défilement de la ficelle de liage, des deuxièmes moyens de détection (51) de la formation de la balle à un pourcentage prédéterminé inférieur à 100% pour avertir le conducteur de la terminaison prochaine de la balle, des moyens de commande automatique de la pression pour les moyens de densification et des moyens de commande automatique de l'arrêt des organes d'enroulement lorsque les moyens de détection précités du défilement de la ficelle de liage ne sont plus sollicités.

2. Presse à balles selon la revendication 1, caractérisée en ce que les moyens de densification de la balle comportent des vérins hydrauliques (34) coopérant avec des moyens de commande automatique de leur alimentation sous une pression réglable normalement maintenue constante pendant la période de formation de la balle, les vérins étant automatiquement alimentés lors de la fermeture de la porte (13) et la pression étant automatiquement supprimée lors de la commande d'ouverture de la porte.

3. Presse selon la revendication 1, caractérisée en ce qu'elle comporte des moyens de commande automatique du commencement du ficelage lorsque les premiers moyens de détection (50) précités sont sollicités et des moyens de commande automatique de la terminaison du ficelage lorsque les moyens de détection du défilement de la ficelle sont sollicités.

**4.** Presse selon la revendication 3, caractérisée en ce que les moyens de détection du défilement de la ficelle comportent des poulies en contact avec la ficelle et entraînées en rotation lors de son défilement et des capteurs détectant la rotation desdites poulies.

**5.** Presse selon la revendication 1, caractérisée en ce que les moyens de commande automatique des organes d'enroulement comprennent un embrayage (21) interposé entre ceux-ci et la prise de force du tracteur sur l'arbre d'entraînement desdits organes relié à la prise de force du tracteur, ledit embrayage étant commandé par un vérin (19) actionné automatiquement lorsque le ficelage est terminé.

**6.** Presse à balle selon la revendication 1, caractérisée en ce que les moyens de détection (51) de formation de la balle à un pourcentage inférieur à 100% agissent lorsque le diamètre de la balle atteint environ 90% du diamètre maximal prédéterminé.

**7.** Presse selon la revendication 2, caractérisée en ce que les moyens de densification de la balle comportent un levier (29) supportant des rouleaux (28) de tension des organes d'enroulement (24), ledit levier étant fixé sur un arbre (31) pivotant comportant des cames (32) sur lesquelles s'enroulent des chaînes (33) reliées aux extrémités des tiges des vérins (34) de sorte que la pression constante dans les vérins (34) crée sur ledit arbre (31) un couple variable en fonction de la position angulaire dudit levier (29).

**8.** Presse à balle selon l'une quelconque des revendications 1 à 7, caractérisée en ce qu'elle comporte un pupitre (70) de contrôle disposé sur le tracteur comportant des moyens de détection (51) et de signalisation (76) de la formation de la balle à un pourcentage inférieur à 100%, des moyens de détection et de signalisation (78) du défilement de la ficelle pendant le ficelage, des moyens de commande automatique de l'arrêt des organes d'enroulement lorsque le ficelage est terminé, et des moyens de contrôle et de réglage de la force de densification de la balle qui sont mis automatiquement respectivement en et hors service lors de la fermeture et de l'ouverture de la porte.

## Claims

**1.** Cylindrical bale press, towed and automated, comprising members (20) for rolling the bale driven by a power take-off shaft of a tractor and cooperating with means (29, 31, 32, 33, 34) for exerting a compacting force on the bale, a rear door (13) which can be raised to allow ejection of the bale, means (50) for detection of a predetermined maximum diameter of the bale, means (35, 36) for tying the bale which are put into operation automatically when the detection means (50) are acted upon, and means for automatic control of opening and closure of the door (13) for ejecting the finished bale, characterised in that it also comprises means for detecting unwinding of the binding string, second means (51) for detecting formation of the bale to a predetermined percentage less than 100% in order to warn the driver of imminent finishing of the bale, means for automatic control of the pressure for the compacting means, and means for automatic control of stopping of the rolling members when the aforementioned means for detecting unwinding of the binding string are no longer acted upon.

**2.** Bale press according to claim 1, characterised in that the bale compacting means comprise hydraulic actuators (34) cooperating with means for automatic control of their supply at an adjustable pressure normally kept constant during the period of bale formation, the actuators being automatically supplied during closure of the door (13) and the pressure being automatically suppressed during control of opening of the door.

**3.** Press according to claim 1, characterised in that it comprises means for automatic control of commencement of tying when the first aforementioned detection means (50) are acted upon and means for automatic control of finishing of tying when the means for detecting unwinding of the string are acted upon.

**4.** Press according to claim 3, characterised in that the means for detecting unwinding of the string comprise pulleys in contact with the string and driven in rotation during unwinding thereof and sensors detecting rotation of said pulleys.

**5.** Press according to claim 1, characterised in that the means for automatic control of the rolling members comprise a clutch (21) interposed between them and the power take-off shaft of the tractor on the drive shaft of said members connected to the power take-off shaft of the tractor, said clutch being controlled by an actuator (19) operated automatically when tying is finished.

6. Press according to claim 1, characterised in that the means (51) for detecting formation of the bale to a percentage less than 100% act when the diameter of the bale reaches about 90% of the predetermined maximum diameter.

7. Press according to claim 2, characterised in that the means for compacting the bale comprise a lever (29) supporting tension rollers (28) for the rolling members (24), said lever being fixed to a pivot shaft (31) comprising cams (32) over which are rolled chains (33) connected to the ends of the rods of the actuators (34) in such a way that the constant pressure in the actuators (34) generates on said shaft (31) a torque variable as a function of the angular position of said lever (29).

8. Bale press according to any of claims 1 to 7, characterised in that it comprises a control console (70) disposed on the tractor comprising means for detecting (51) and signalling (76) formation of the bale to a percentage less than 100%, means for detecting and signalling (78) unwinding of tile string during tying, means for automatic control of stopping of the rolling members when tying is finished, and means for monitoring and adjusting the bale compacting force which are automatically put into and out of operation respectively during closure and opening of the door.

**Patentansprüche**

1. Gezogene und automatische Rundballenpresse, mit Aufwickelorganen (20) des Ballens, angetrieben durch eine Zapfwelle eines Traktors, und zusammenwirkend mit Einrichtungen (29,31,32,33,34), um eine Verdichtungskraft auf den Ballen auszuüben, einer hinteren Tür (13), die anhebbar ist, um den Auswurf des Ballens zu erlauben, Erfassungseinrichtung (50) eines maximalen vorbestimmten Durchmessers des Ballens, Verschnürungseinrichtungen (35,36) des Ballens, die automatisch in Betrieb gesetzt werden, wenn die Erfassungseinrichtungen (50) beansprucht bzw. beaufschlagt werden, und mit automatischen Betätigungseinrichtungen des Öffnens und Schließens der Tür (13), um den fertiggestellten Ballen auszuwerfen, **dadurch gekennzeichnet,** daß sie ebenfalls Erfassungseinrichtungen des Ablaufens der Verbindungsschnur, zweite Erfassungseinrichtungen (51) der Bildung des Ballens bis zu einem vorbestimmten Prozentsatz, geringer als 100%, um dem Fahrer das nächste Fertigstellen des Ballens voranzumelden, automatische Steuereinrichtungen des Druckes für die Verdichtungseinrichtungen und automatische Steuerungseinrichtungen des Anhaltens der Aufwickelorgane aufweist, wenn die vorgenannten Erfassungseinrichtungen des Ablaufens der Verbindungsschur nicht mehr beaufschlagt sind.

2. Ballenpresse nach Anspruch 1, **dadurch gekennzeichnet,** daß die Verdichtungseinrichtungen des Ballens hydraulische Stelltriebe (34) aufweisen, die mit automatischen Steurungseinrichtungen ihrer Speisung unter einem einstellbaren Druck zusammenwirken, der normalerweise konstant während der Dauer der Ballenbildung gehalten wird, wobei die Stelltriebe automatisch betätigt werden beim Schließen der Tür (13) und der Druck automatisch beim Befehl zum Öffnen der Tür weggenommen wird.

3. Presse nach Anspruch 1, **dadurch gekennzeichnet,** daß sie automatische Steuereinrichtungen des Beginns des Verschnürens aufweist, wenn die ersten vorgenannten Erfassungseinrichtungen (50) beansprucht werden und automatische Steuereinrichtungen des Beendens des Verschnürens aufweist, wenn die Erfassungseinrichtungen des Ablaufens der Schnur beansprucht werden.

4. Presse nach Anspruch 3, **dadurch gekennzeichnet,** daß die Erfassungseinrichtungen des Ablaufens der Schnur Rollen aufweisen, die in Kontakt mit der Schnur sind und in Drehung versetzt werden bei ihrem Ablaufen, und Aufnehmer die Drehung der Rollen erfassen.

5. Presse nach Anspruch 1, **dadurch gekennzeichnet,** daß die automatischen Steuereinrichtungen der Aufwickelorgange eine ausrückbare Kupplung (21) aufweisen, die zwischen diesen und der Zapfwelle des Traktors auf der Antriebswelle der genannten Organe angebracht sind, die mit der Zapfwelle des Traktors verbunden ist, wobei die ausrückbare Kupplung durch einen Stelltrieb (10) gesteuert wird, der automatisch betätigt wird, wenn die Verschnürung beendet ist.

6. Ballenpresse nach Anspruch 1, **dadurch gekennzeichnet,** daß die Erfassungseinrichtung (51) der Bildung des Ballens bis zu einem Prozentsatz geringer als 100% wirken, wenn der Durchmesser des Ballens ungefähr 90% des vorbestimmten maximalen Durchmessers erreicht.

7. Presse nach Anspruch 2, **dadurch gekenn-**

**zeichnet,** daß die Verdichtungseinrichtungen des Ballens einen Hebel (29) aufweisen, der Spannrollen (28) von Aufwickelorgangen (24) trägt, wobei der Hebel auf einer schwenkbaren Achse (31) befestigt ist, die Nocken (32) aufweist, auf denen sich Ketten (33) aufwickeln, die mit Enden von Stelltriebstangen (34) derart verbunden sind, daß der konstante Druck der Stelltriebe (34) auf der Achse (31) ein unterschiedliches Moment in Abhängigkeit der Winkelposition des Hebels (29) erzeugt.

8. Ballenpresse nach einem der Ansprüche 1 bis 7, **dadurch gekennzeichnet,** daß sie ein Steuerpult (70) aufweist, das an dem Traktor angeordnet ist, mit Erfassungseinrichtungen (51) und Anzeigeeinrichtungen (76) der Bildung des Ballens bis zu einem Prozentsatz geringer als 100%, Erfassungs- und Anzeigeeinrichtungen (78) des Ablaufens der Schnur während der Verschnürung, automatischen Steuereinrichtungen des Anhaltens der Abwickelorgane, wenn die Verschnürung beendet ist, und Steuer- und Regeleinrichtungen der Verdichtungskraft des Ballens, die automatisch entsprechend in und außer Betrieb gesetzt werden beim Schließen oder Öffnen der Türe.

Fig-1

Fig.2

Fig. 3

Fig. 4

EP 0 271 390 B1